# EUROPEAN PATENT APPLICATION

(11) **EP 0 769 766 A2**
(43) Date of publication of application: **23.04.1997**
(21) Application number: 96307610.4
(22) Date of filing: 21.10.1996
(51) Int. Cl.: G07F 7/02, G06K 1/00

(54) **Two-dimensional code symbol and prepaid card using the same**

(30) Priority: 20.10.1995 JP 295890/95; 18.01.1996 JP 23409/96; 18.01.1996 JP 23414/96; 27.06.1996 JP 185323/96
(71) Applicant: Nagashio, Kichinosuke, Tokyo 150 (JP)
(72) Inventor: Nagashio, Kichinosuke, Tokyo 150 (JP)
(74) Representative: Needle, Jacqueline

(57) **Abstract**

A two-dimensional code symbol for use in prepaid cards comprises a plurality of square basic units (Figure 3). For representation of information regarding numerals and characters, each basic unit includes four square elements. The four square elements have different sizes and are disposed concentrically. Each side (a, b, c, d; a1, b1, c1, d1) of the square element is selectively cut to represent a binary digit, and the basic unit as a whole represents, for example, a 16-digit binary number. Each side of the element may be selectively cut in accordance with coded information such as the Morse code. In this case, the data compression ratio increases more. When in a prepaid card, the two-dimensional code symbol is used to represent the unit price of purchase of specific merchandise or the unit price of payment, the basic unit including only one square element is used. In this case, basic units are printed on a prepaid card in the number needed to indicate an issued amount of money, and a basic unit(s) corresponding to a required amount of payment is filled in to thereby make payment by the card.

## Description

### BACKGROUND OF THE INVENTION

### Field of the Invention:

The present invention relates to a box-figured two-dimensional code symbol (hereinafter referred to as box code) and to a prepaid card using the same.

### Description of the Related Art:

Conventionally, a bar code system has been the most popular technique for recognizing various kinds of information through use of an optical reader (a scanner or the like). A bar code system is not only applied to data management associated with stock control, schedule control, assembly and delivery in the manufacturing industry, but is also used in a POS (point of sales) system at a store.

As is well known, a bar code system uses a linear bar code symbol printed on an information sheet. A linear bar code symbol is irradiated with light, and light reflected from the linear bar code symbol is read by an optical sensor. The thus-read analog signal is converted to a digital signal by an A/D converter. This digital signal is transmitted via a decoder to a microcomputer which identifies numbers, characters, and the like represented by parallel bars of varying thickness and separation, thereby reading and interpreting a bar code.

With increasing use of a bar code system in new fields and an accompanying increase of articles to be handled by a bar code system, it is necessary to increase the amount of coded data represented by a linear bar code symbol. However, a conventional linear bar code symbol fails to meet this demand because the amount of coded data represented thereby is limited.

In order to solve this problem, various two-dimensional code symbols have been proposed. However, conventional two-dimensional code symbols have been developed so as to be readable by a conventional analog device and able to be coded in alphanumeric characters, and are not necessarily suited for present digital processing techniques and equipment.

Most prepaid cards-including credit cards, cash cards (money cards) issued by financial agencies, and telephone cards-are magnetically recorded cards.

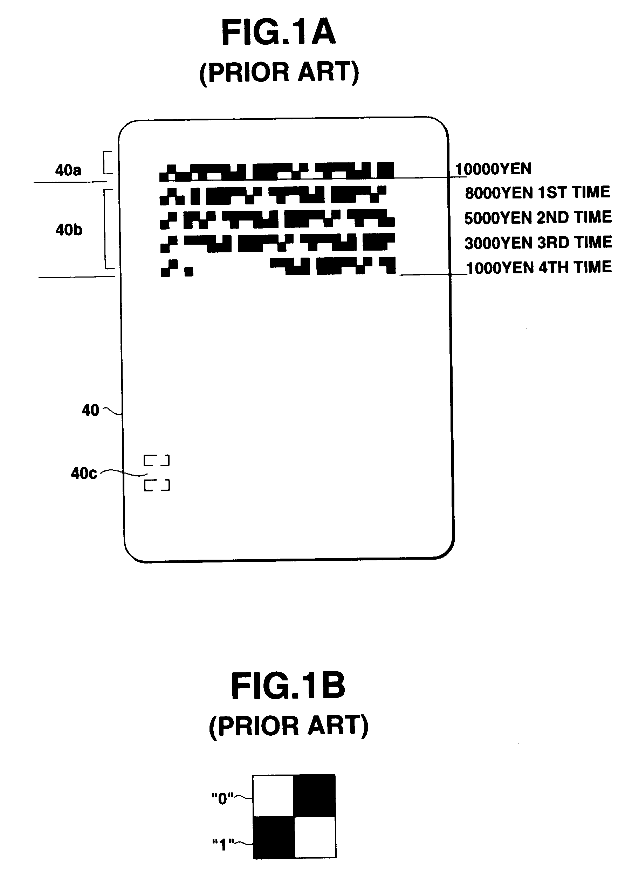

Since these magnetically recorded cards have unreliable security because of potential forgery and alteration, a prepaid card system has recently begun to use a card bearing a two-dimensional graphic code marked by printing, instead of by easy-to-falsify magnetic recording. FIG. 1A shows an example of such a card on which the amount of money is recorded using a two-dimensional graphic code symbol.

Information printed in an upper initial code area 40a of a card 40 shown in FIG. 1A is represented using a two-dimensional 4-segment graphic code symbol shown in FIG. 1B, which is usually called Calra Code. This graphic code symbol is composed of a square basic unit divided into four segments. A filled black segment represents "1", and an unfilled white segment represents "0". The thus-marked code symbols (basic units) are combined to represent various kinds of information. As compared with the bar code, this graphic code symbol can represent a larger quantity of information and can be directly processed by a computer. Also, the graphic code symbol is printed by a special method, and thus is difficult to falsify in contrast with data that is magnetically recorded on a magnetic card, which is easy to falsify using a magnetic head.

However, since each graphic code symbol (basic unit) can represent only one hexadecimal digit, it is still difficult to represent a large amount of information with a small number of code symbols (basic units).

It is one object of the present invention to provide a new two-dimensional code symbol.

According to the present invention there is provided a two-dimensional code symbol comprising at least one basic unit which includes at least one polygonal element, each segment that forms one side of said polygonal element representing a predetermined amount of information.

Preferably, a plurality of polygonal elements of different sizes are disposed concentrically so as to compose a basic unit. Each of the polygonal elements is preferably a quadrangular element, and the number of polygonal elements contained in a basic unit is preferably four. Each side of an element is selectively cut in accordance with a predetermined amount of information to be represented therewith. That is, each side of the element preferably has one or more points at which the side can be cut.

In an embodiment, each segment of a polygonal element represents one binary digit, and one basic unit as a whole is arranged to represent a 16-digit binary number.

For example, each segment of the or each polygonal element represents two or more binary digits.

Preferably, each segment is cut in accordance with a code to represent information such as binary digits. Each segment may be cut, for example, with a code comprising a long element and a short element. Additionally and/or alternatively, each segment may be cut in accordance with a Morse code, and/or an ITF code, and/or any other code.

For example, each side of an element may represent one binary digit, such that one basic unit as a whole represents a 16-digit binary number. Alternatively, each side may represent two or more binary digits.

When each side of an element is selectively cut in accordance with the binary notation, each basic unit represents a corresponding binary code indicative of a numeral, a character, or the like. Thus, a corresponding binary code can be directly obtained without read data being decoded.

When each side of an element is cut in accordance with the Morse code or the like, data can be represented by a two-dimensional code symbol in a compressed manner.

The present invention provides a payment card, more preferably a prepaid card, bearing information represented by the above-described basic unit(s). In this case, a two-dimensional code symbol is preferably printed onto a card using transparent ink.

Thus, there can be provided a payment card which facilitates writing/reading of information and which is difficult to falsify.

Further, the present invention provides a prepaid card onto which merchandise marks are written in a predetermined area upon issuance, each mark corresponding to a unit price of specific merchandise, in the number needed to indicate the issued amount of money. In this case, each of the merchandise marks includes a polygonal element, each side of which is selectively cut so as to represent the amount of money. When such a card is used, a merchandise mark(s) corresponding to a required amount of payment is filled in so as to be nullified, thereby making payment by the card.

Still further, the present invention provides a prepaid card onto which currency marks are written in a predetermined area upon issuance, the marks corresponding to an issued amount of money. In this case, each of the currency marks includes a polygonal element, each side of which is selectively cut so as to represent the amount of money. When such a card is used, a currency mark(s) corresponding to a required amount of payment is filled in so as to be nullified, thereby making payment by the card.

Accordingly, a prepaid card according to the present invention can facilitate encoding/decoding of merchandise/currency marks, thereby significantly reducing the amount of computation. Also, since considerable compression of data becomes possible, system efficiency can be improved.

### BRIEF DESCRIPTION OF THE DRAWINGS

Various other objects, features and many of the attendant advantages of the present invention will be readily appreciated as the same becomes better understood by reference to the following detailed description of the preferred embodiments when considered in connection with the accompany drawings, in which:
FIG. 1A is a plan view of a card using a conventional two-dimensional code symbol;
FIG. 1B is a diagram showing a basic unit used with the conventional card of FIG. 1A;
FIG. 2 is a diagram of a basic unit showing a first embodiment of a box code according to the present invention;
FIG. 3 is a diagram showing one element of the basic unit of FIG. 2;
FIGS. 4A to 4D are explanatory diagrams of the element of FIG. 3;
FIGS. 5A to 5C are diagrams showing a modified example of the element of FIG. 3;
FIG. 6 is a diagram showing a modified example of the basic unit of FIG. 2;
FIG. 7 is a diagram showing a combined arrangement of the basic units of FIG. 2;
FIG. 8 is a diagram of a basic unit showing a second embodiment of a box code according to the present invention;
FIG. 9 is a diagram showing a first element of the basic unit of FIG. 8;
FIG. 10 is a diagram showing a modified example of the basic unit of FIG. 8;
FIG. 11 is a diagram of a basic unit showing a third embodiment of a box code according to the present invention;
FIGS. 12A and 12B are explanatory diagrams of the Morse code of FIG. 11;
FIG. 13 is a diagram of a basic unit showing a fourth embodiment of a box code according to the present invention;
FIGS. 14A to 14D are explanatory diagrams of an ITF bar code for use in physical distribution;
FIG. 15 is a plan view showing a first embodiment of a prepaid card according to the present invention;
FIG. 16 is a schematic block diagram of a card-issuing machine for issuing the prepaid card of FIG. 15;
FIG. 17 is a schematic block diagram of a card reader for reading information from the prepaid card of FIG. 15;
FIG. 18 is a plan view showing a second embodiment of the prepaid card according to the present invention;
FIGS. 19A to 19C are explanatory diagrams of a rotation key;
FIGS. 20A to 20D are detailed diagrams of merchandise marks shown in FIG. 18;
FIG. 21 is a schematic block diagram of a card-issuing machine for issuing the prepaid card of FIG. 18;
FIG. 22 is a schematic block diagram of a card reader for reading information from the prepaid card of FIG. 18; and
FIGS. 23A to 23D are detailed diagrams of a currency mark showing a modified example of the second embodiment of the prepaid card of FIG. 18.

### DESCRIPTION OF THE EMBODIMENTS

First will be described embodiments of a two-dimensional box code according to the present invention. First Embodiment of Box Code:

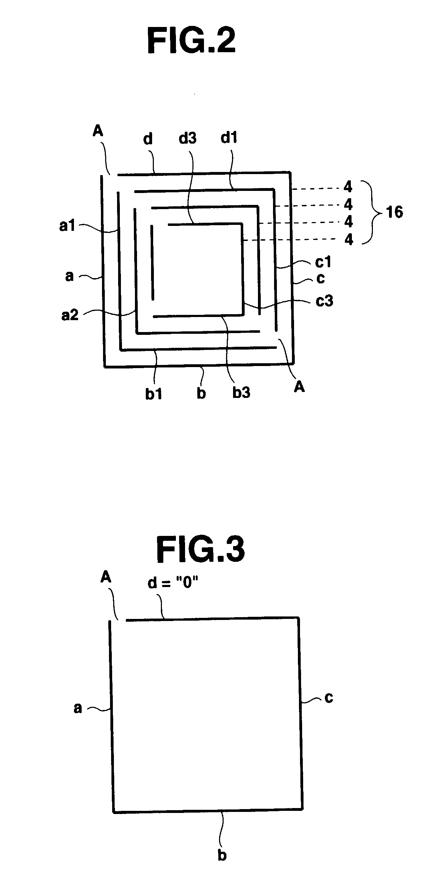

FIG. 2 shows a basic unit used in a first embodiment of a box code according to the present invention.

As shown in FIG. 2, the basic unit used in the box code comprises four square elements of different sizes. An outermost first element comprises segments a, b, c, and d; a second element located immediately inside the first element comprises segments a1, b1, c1, and d1; a third element located immediately inside the second element comprises segments a2, b2, c2, and d2; and an innermost fourth element comprises segments a3, b3, c3, and d3. When each segment of each element represents 1-bit binary information, one square (element) can represents 4-bit binary information. Accordingly, the basic unit comprising four such nested squares can represent 16-bit information. (In other words, 2¹⁶ (256 x 256 = 65536) representations are possible.)

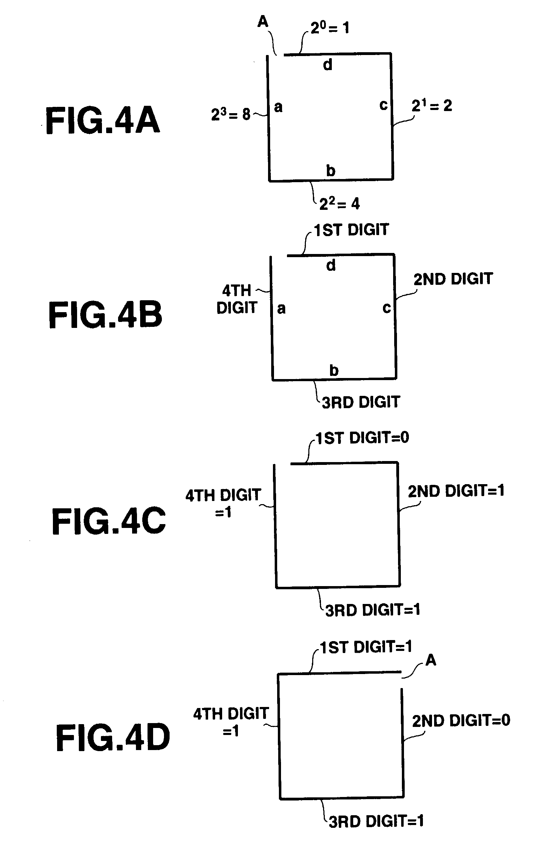

Referring to FIG. 3, which shows the outermost first element, binary representation through use of the segments a, b, c, and d will be described. In this figure, a complete segment not having a cutout A represents "1," and a cut segment having the cutout A represents "0." According to this rule, in the element of FIG. 3, segment a = "1"; segment b = "1"; segment c = "1"; and segment d = "0." Thus, the element of FIG. 3 represents a binary value "1110."

Conversion from decimal to binary will be described with reference to FIGS. 4A to 4D, which show an element indicative of a binary code. For example, decimal values 14, 13, and 250 correspond to binary values "1110," "1101," and "11111010," respectively. Decimal 2ⁿ is assigned to segments of an element as shown in FIG. 4A; that is, segment d = 2⁰ = 1, segment c = 2¹ = 2, segment b = 2² = 4, and segment a = 2³ = 8. Also, binary digit positions (n digits) are assigned to segments of an element as shown in FIG. 4B; that is, segment d = first digit, segment c = second digit, segment b = third digit, and segment a = fourth digit. Thus, through arrangement of "1" or "0" assigned to segments in the order of digit positions, a binary code can be formed.

For example, in FIG. 4C, segment d (having cutout A) = first digit = "0," segment c = second digit = "1," segment b = third digit = "1," and segment a = fourth digit = "1." Thus, arrangement of these 0s and 1s in the descending order of digit positions results in binary "1110." As shown in FIG. 4A, segment d = "0" = 0, segment c = "1" = 2, segment b = "1" = 4, and segment a = "1" = 8. Thus, the binary value "1110" represents decimal value 14 (8 + 4 + 2 + 0 = 14).

Likewise, in FIG. 4D, segment c (having cutout A) = "0." Accordingly, the element of FIG. 4D represents binary value "1101," which is decimal value 13 (8 + 4 + 0 + 1 = 13). Thus, binary representation can be realized through arrangement of basic units of the box code. Also, hexadecimal representation can be readily realized through use of the box code.

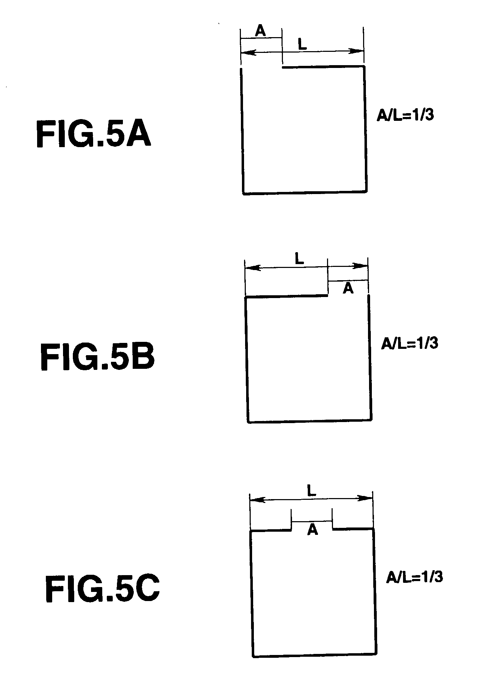

As shown in FIGS. 5A to 5C, each segment of an element can be cut in the following manner. FIG. 5A shows an example of cutting a segment at the left end thereof, and the length of cutout A is about 1/3 of segment length L. This is employed in the present embodiment. FIG. 5B shows an example of cutting a segment at the right end thereof, and the length of cutout A is also about 1/3 of segment length L. FIG. 5C shows an example of cutting a segment at the center thereof, and the length of cutout A is also about 1/3 of segment length L. So far, the outermost first element of FIG. 5 has been discussed, but the position of cutout A and the ratio of cutout A to segment length L in the first element are also applicable to the second through fourth elements. Also, any of the above-described three positions of a cutout can be selected as needed for convenience of reading.

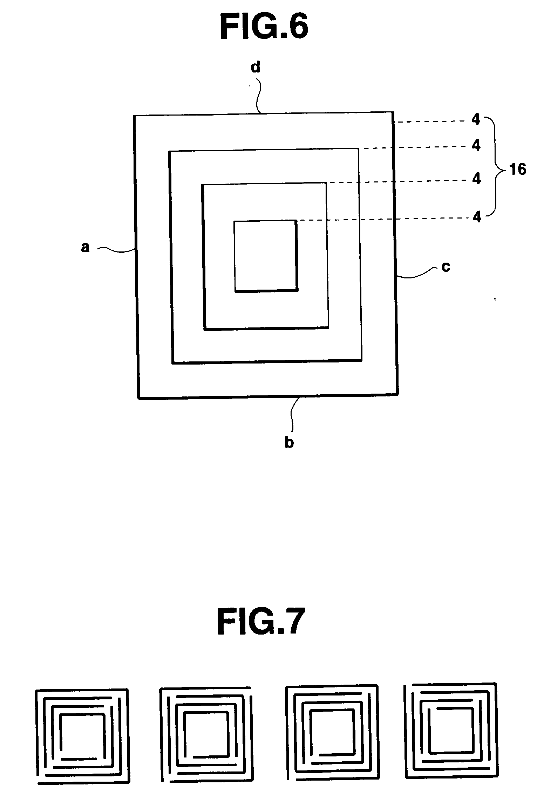

FIG. 6 shows a modified example of the basic unit of the box code. As in the basic unit of FIG. 2, the basic unit of FIG. 6 comprises four such nested elements, each having segments a, b, c, and d. The basic unit of FIG. 6 is different from that of FIG. 2 in that two kinds of segments, thick and thin, are used for binary representation. That is, a thick segment represents "1," and a thin segment represents "0."

FIG. 7 shows a combined arrangement of the basic units of FIG. 2. In FIG. 7, four basic units of FIG. 2 are arranged in a horizontal block pattern. However, basic units may be arranged either vertically or horizontally, and the number of basic units in a block is not limited to four. Since one alphabetic character is represented by 1 byte (8 bits) of information, and a kanji (Chinese) character is represented by two bytes of information, character information can be smoothly handled through use of the above-described arrangement of basic units.

### Second Embodiment of Box Code:

A second embodiment of the box code according to the present invention will be described.

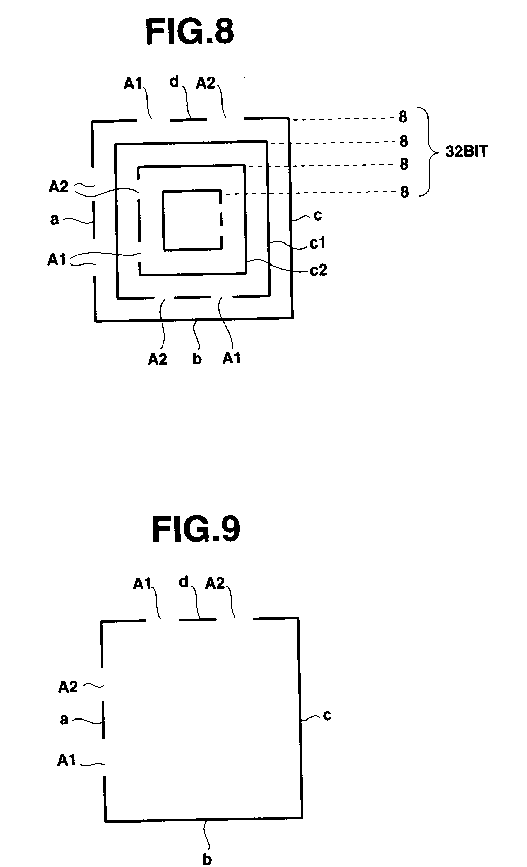

As shown in FIG. 8, a basic unit according to the second embodiment has a structure similar to that of the basic unit shown in FIG. 2. That is, an outermost first element comprises segments a, b, c, and d; a second element comprises segments a1, b1, c1, and d1; a third element comprises segments a2, b2, c2, and d2; and a fourth element comprises segments a3, b3, c3, and d3. Also, each segment is adapted to binary representation. However, in the present embodiment, a segment is cut at two positions A1 and A2, not at only one position. As seen from FIG. 9, which shows the first element, the segment a having two cutouts can represent a 2-bit binary number. That is, the presence or absence of cutout A1 represents a first digit, and the presence or absence of cutout A2 represents a second digit. In FIG. 9, the cutouts A1 and A2 represent binary "11."

When one segment can represent two bits as described above, one element can represent 8 bits. Thus, one basic unit as a whole can represent 32 bits; that is, 2³² (about 4.3 billion) representations are possible. As compared with a box code containing basic units shown in FIG. 2, a box code shown in FIG. 8 and containing the same number of basic units can represent twice as much information. That is, data is compressed at the ratio of 2:1 or into 1/2 the space when converted to a box code. Likewise, when a segment has three points A1, A2, and A3 at which the segment can be cut, one segment represents 3 bits, and thus one basic unit as a whole represents 48 bits, resulting in 2⁴⁸ (about 281 trillion) potential representations.

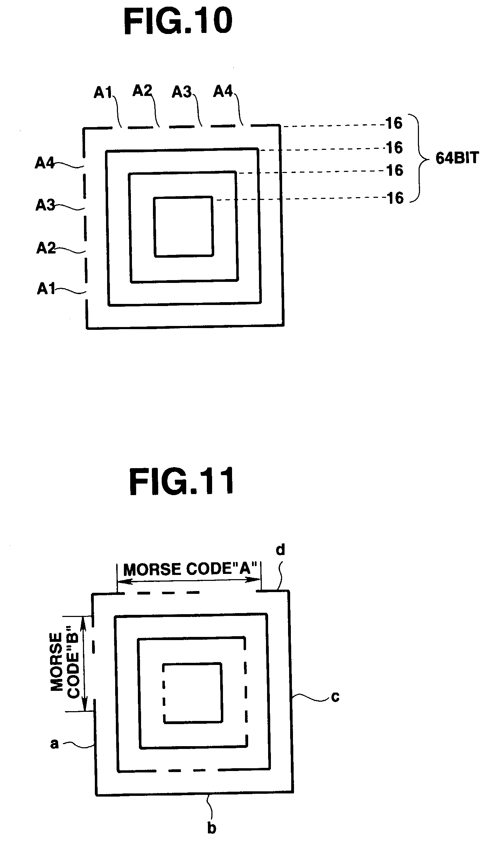

FIG. 10 shows a basic unit wherein one segment can be cut at four positions A1, A2, A3, and A4. One segment having four positions for cutting represent 4 bits, and thus one basic unit as a whole represents 64 bits, resulting in 2⁶⁴ (about 18.4 quintillion) potential representations. As compared with the "1 segment = 1 bit" representation, data can be compressed at the ratio of 4:1 or into 1/4 the space.

This compression of data will now be described with reference to a personal name composed of four kanji characters. Since one kanji character is represented by 16 bits, representation of the four-kanji-character name requires four basic units shown in FIG. 2. By contrast, since the basic unit shown in FIG. 10 can represent 64-bit information, the four-kanji-character name can be represented by one basic unit shown in FIG. 10. That is, data can be compressed into 1/4 the space. Other ID information such as address, date of birth, place of birth, telephone number, and place of employment can also be represented by the box code according to the present embodiment.

According to the present embodiment, one segment can have up to four cutouts. However, the number of cutouts can be increased to more than four so long as the accuracy of detection is high enough.

### Third Embodiment of Box Code:

A third embodiment of the box code according to the present invention will now be described.

In the second embodiment, the number of bits represented by one basic unit is increased in order to increase the data compression ratio. In the present embodiment, a character, a numeral, or the like is coded beforehand, and the thus-prepared code (here, a Morse code) is embedded into a segment of a basic unit, thereby compressing information.

As in the first and second embodiments, the basic unit according to the present embodiment shown in FIG. 11 comprises four square elements, each element having four segments. To represent data, each segment is cut in accordance with the Morse code.

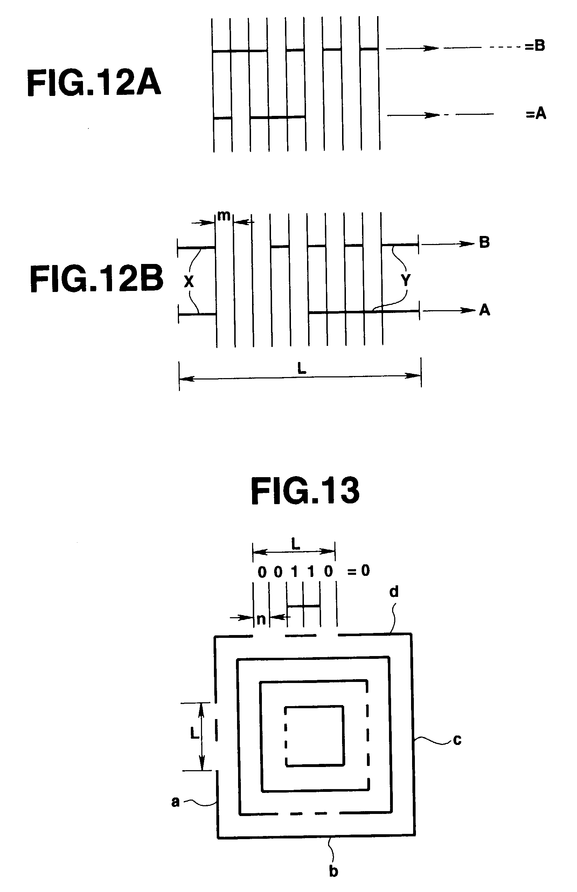

FIG. 12A shows Morse codes for "A" and "B." As seen from FIG. 12A, the overall length of the Morse code varies according to the character represented. However, through use of the format shown in FIG. 12B, the overall length of a segment indicative of a Morse code is fixed at L, irrespective of the character represented by the Morse code. Specifically, each segment is composed of a data head part X, a code part, and a data end part Y. In the code part, a segment is cut at portions corresponding to a dot(s) and a dash(es) of the Morse code. Taking m as the unit length of a cutout, a dot is represented by a cutout having a length of m, and a dash is represented by a cutout having a length of 3 x m.

Since each segment is cut in accordance with the Morse code, density of representation of information can be increased. For example, in order to represent four alphabetic characters ABCD, two basic units of FIG. 2 are needed because one alphabetic character is represented by 8 bits. By contrast, in the basic unit of the present embodiment, one segment can represent one character, and thus four alphabetic characters can be represented by one element. That is, for characters and numerals capable of being represented by the Morse code, data is compressed into roughly 1/8 the space. Thus, one basic unit of the present embodiment can represent 16 characters.

### Fourth Embodiment of Box Code:

Next, a fourth embodiment of the box code according to the present invention will be described.

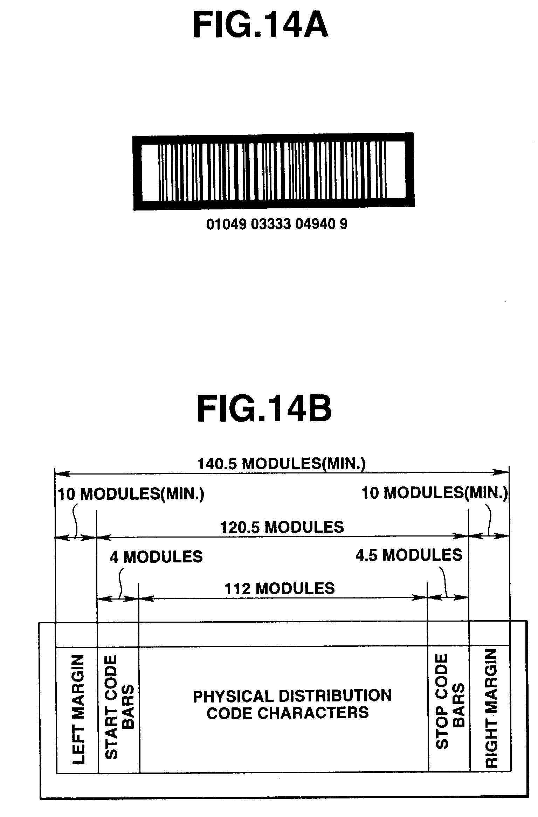

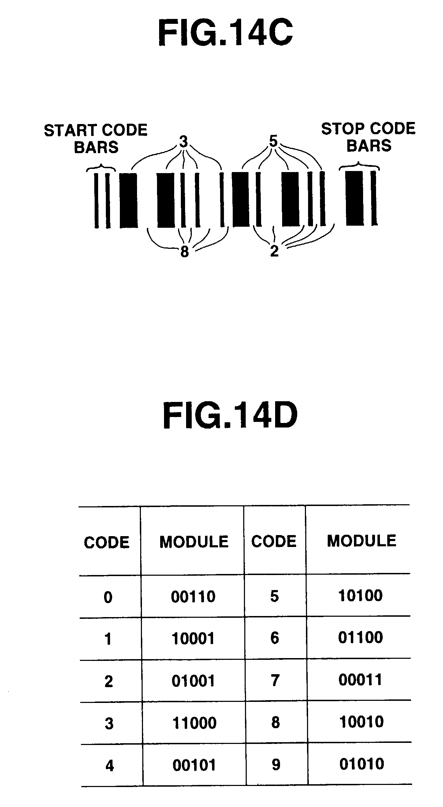

FIG. 13 shows the box code according to the present embodiment. This box code is used to represent the ITF (Interleaved Two of Five) code. FIG. 14A shows an example of the ITF bar code. FIG. 14B shows the contents of the bar code shown in FIG. 14A. FIG. 14C shows a detailed bar pattern of the bar code shown in FIG. 14A. FIG. 14D shows a code table.

Combined numerals of the code table shown in FIG. 14D represent information regarding the quantity of packaged merchandise items, whether or not merchandise is a sample, etc.

In the box code of the present embodiment shown in FIG. 13, segment d of a first element represents numerical code 0 = "00110," for example. That is, a code representation area having length L is divided into 5 parts, each having length n (n = L/5) and corresponding to a bit, and these parts are cut/uncut (uncut part = "1", cutout = "O"), to thereby represent numerical information in a compressed manner.

In the ITF code, 5 bits represent one numeral, such as "00110" = 0, and in the box code according to the present embodiment, one segment represents one character. Thus, as compared with the box code shown in FIG. 2, data is compressed at the ratio of 5:1 or into 1/5 the space. The ratio of data compression depends on a code embedded into a segment. For example, when a code embedded into a segment is designed to represent 10-bit data by 1 bit, the ratio of data compression becomes 10:1.

Thus, the box code allows the ratio of data compression to be freely selected through adjustment of the number of points where each segment can be cut. In the case of the Calra Code, a nested structure cannot be employed, and thus data cannot be compressed more than the case where each basic unit represents 4 bits.

The above-described third and fourth embodiments use the Morse code and the ITF code, respectively, to represent data. However, a code for use with the box code of the present invention is not limited thereto. Any code can be used so long as it can be embedded into each segment of the basic unit. For example, when each segment is coded such that it represents one of the 10 numeric characters 0 to 9, one basic unit can provide 10¹⁶ (10 quadrillion) representations. When each segment is coded such that it represents one of 128 characters, one basic unit can provide 128¹⁶ representations.

The box code of the present invention can be applied not only to prepaid cards, which will be described below, but also to other types of cards including credit cards and cash cards (money cards).

Also, the box code of the present invention can be used in those fields where the bar code is presently used, including food sales management and physical distribution.

Next will be described embodiments of a prepaid card using the above-described box code according to the present invention.

### First Embodiment of Prepaid Card

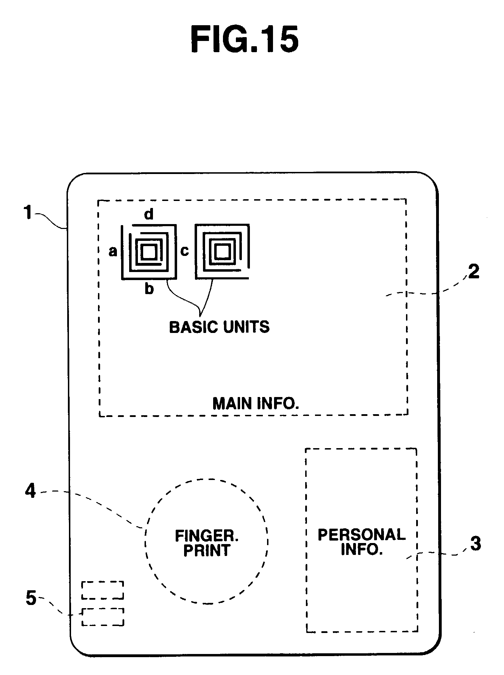

FIG. 15 shows a first embodiment of a prepaid card according to the present invention.

As shown in FIG. 15, there is provided on the surface of a prepaid card 1 a main information area 2 into which the amount of money or the like is written through use of the box code. As needed, there are also provided on the card surface a personal information area 3 into which personal information is written, also through use of the box code, and a fingerprint area 4 in which a user's fingerprint is recorded. Further, a data rotation key 5 for security is written onto the prepaid card 1. The box code used to represent the main information and the personal information is written in transparent ink so as to be transparent when irradiated with visible rays, but to become readable when irradiated with rays having special wavelengths, including ultraviolet rays. Writing in such transparent ink is performed, for example, through use of STEALTH (trademark) ink ribbon LM-T100W of Hitachi Maxell, Ltd. Ink of this ink ribbon contains a fluorescent substance. When the prepaid card 1 is irradiated with a ray of a special wavelength, the marked box code emits a ray of a different wavelength (an infrared ray, for example). The thus-emitted light is detected by CCD or the like to thereby read the box code.

In the present embodiment, the box code uses the basic unit shown in FIG. 2, but another type of basic unit may alternatively be used.

Next will be described issuance of and reading of data from the prepaid card 1.

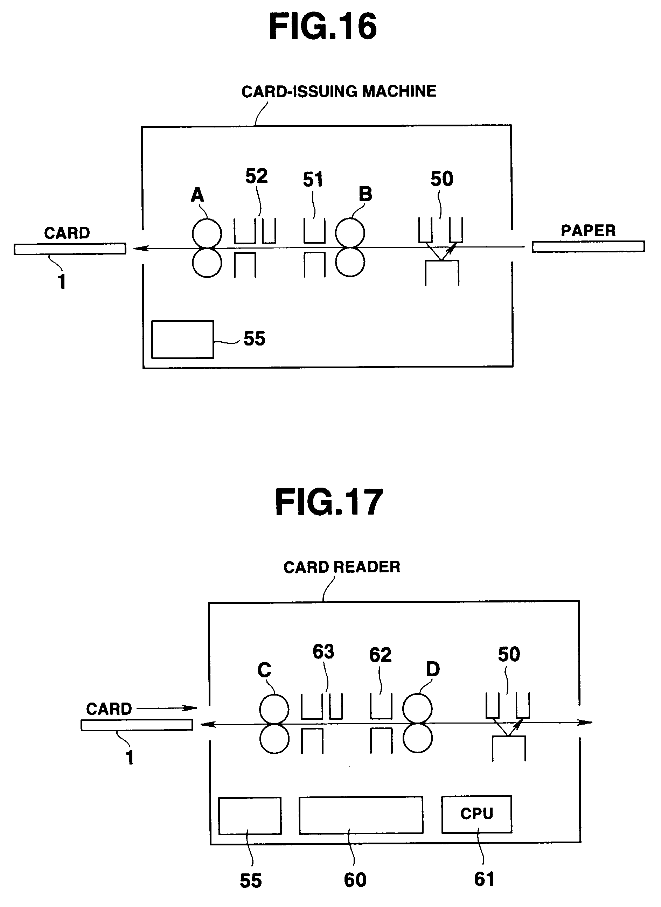

FIG. 16 shows a schematic block diagram of a card-issuing machine for issuing a card for use in a place of amusement such as a pachinko parlor. The card-issuing machine of FIG. 16 constitutes means for writing data into a card. For example, when a bill is inserted into the card-issuing machine, a write head 51 writes information regarding the amount of money into the main information area 2 of the prepaid card 1, and the prepaid card 1 bearing the written information is then issued.

When data is to be written in the box code, the rotation key 5 printed on paper of a card in transparent ink is irradiated with a special ray so that a key code reading sensor 50 can read the rotation key 5. When the rotation key 5 is, for example, "2," each basic unit of the box code is rotated in the amount of 2 x 90° in a specified direction (clockwise or counterclockwise). That is, when the basic unit shown in FIG. 2 is rotated clockwise in the amount of 2 x 90°, segment a comes to the position of segment c of FIG. 2, segment b comes to the position of segment d of FIG. 2, and so on. Thus, data is encrypted through this rotation to thereby prevent forgery.

The box code, which represents information regarding the amount of money and has been rotated for encryptation, is written in transparent ink onto a card by the write head 51, which moves at a predetermined speed in a direction perpendicular to the moving direction of the card. Thus, the main information has been printed into the main information area 2. Operation for writing the amount of money by using box codes is similar to that of a second embodiment of a prepaid card, which will be described later.

When there are any other auxiliary data including personal data to be written, the data are written into the personal information area 3. Also, a user's fingerprint is taken by CCD of a fingerprinting unit 55. The thus-taken fingerprint is stored in a memory and printed in transparent ink onto the fingerprint area 4 of the prepaid card 1.

Upon completion of data writing, the prepaid card 1 is irradiated with a ray of a special wavelength so that an optical read head 52 reads the written data for verification. After the written data are confirmed to be valid, the prepaid card 1 is coated and then delivered to the user.

FIG. 17 shows a schematic block diagram of a card reader in a prepaid card system. For payment by the prepaid card 1, a user inserts the prepaid card 1 into the card reader and enters a desired amount of payment from a payment input section 60. The prepaid card 1 is irradiated with a ray of a special wavelength, and a key code reading sensor 50 reads the rotation key 5. Also, an optical read head 63 reads the main information, the personal information, and the printed fingerprint. A CPU 61 receives information transmitted from the key code reading sensor 50 and the optical read head 63. The user's fingerprint taken by the fingerprinting unit 55 is compared with a fingerprint image read from the prepaid card 1. The CPU 61 rotates the basic units of the box code representing the main information in a direction opposite to that used in writing, based on the rotation key 5; for example, counterclockwise in the amount of 2 x 90°, thus decoding the box code to thereby detect the amount of money (the balance).

The optical read head 63 moves in a direction perpendicular to the moving direction of the prepaid card 1 so as to scan and read the box code oriented across the width of the card 1 by an optical sensor (or batch-read by an area sensor).

The box code read by the read head 63 is decoded in the procedure opposite to that of writing. Subsequently, the CPU 61 confirms information regarding the balance and other information (for example, a fingerprint identification) recorded on the prepaid card 1, and instructs the system to deliver items of amusement such as pachinko balls. Then, a write head 62 writes renewal data onto the prepaid card 1 so as to update the balance recorded in the main information area 2. The write head 62 writes the renewal data in transparent ink. Subsequently, the prepaid card 1 is returned to the user. Operation for writing the balance is similar to that of a second embodiment of the prepaid card, which will be described later.

As described above, the present embodiment uses the simple two-dimensional code symbol and improves security significantly through printing of data in transparent ink, encryptation by the rotation key, and identification of a user's fingerprint.

### Second Embodiment of Prepaid Card:

Next will be described a second embodiment of a prepaid card according to the present invention.

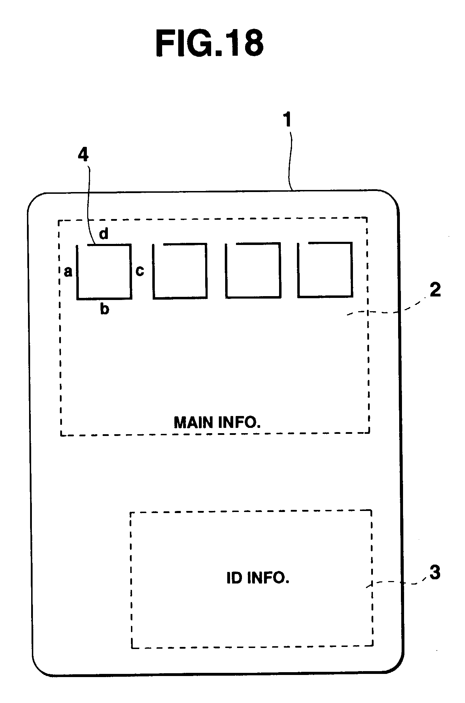

A prepaid card 1 shown in FIG. 18 has a main information area 2, into which a merchandise mark 4 is written, and an ID information area 3, into which personal information, a fingerprint, and the like are written. The merchandise mark 4 comprises a basic unit corresponding to the unit price of a certain merchandise item. The ID information area 3 is not usually used, except when high security is required.

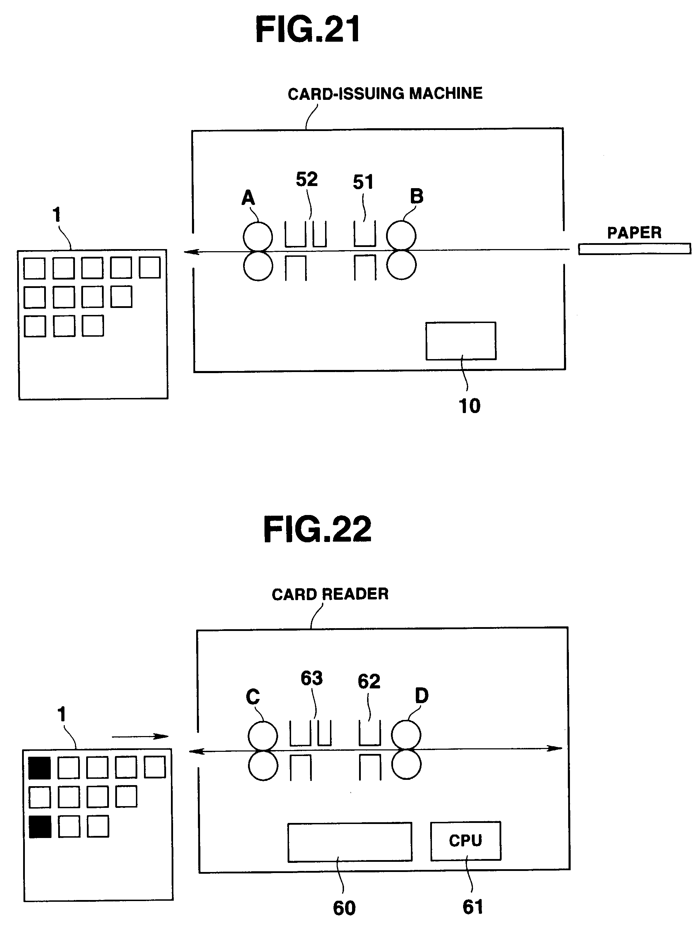

FIG. 21 shows a card-issuing machine for issuing the prepaid card 1 shown in FIG. 18. FIG. 22 shows a card reader for reading data from the prepaid card 1. The card-issuing machine shown in FIG. 21 has a mechanism similar to that of conventional card-issuing machines, but employs a control unit 10 in place of a rotation key sensor. According to the present embodiment, the starting basic unit of recorded data is used as rotation key "K," and the control unit 10 performs encryptation through use of the rotation key "K." This eliminates a rotation key sensor.

The card reader shown in FIG. 22 does not have the rotation key sensor, either. In the prepaid card 1 of the present embodiment, the basic unit of the box code shown in FIG. 2 is used as a merchandise mark.

Next will be described operation of the present embodiment.

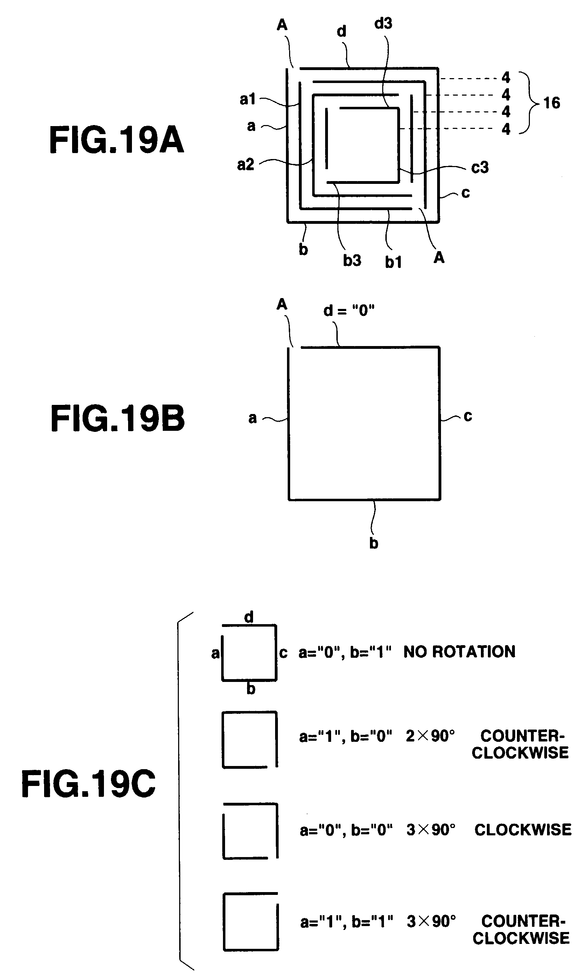

First, the rotation key "K" used in the present embodiment will be described with reference to FIGS. 19A to 19C. FIGS. 19A and 19B correspond to FIGS. 2 and 3, respectively. The basic unit of FIG. 19A is the starting basic unit of a series of basic units that represents information; i.e. the basic unit that represents a starting data item, and is used as a rotation key. Which basic unit is used as a rotation key depends on a system; a unit other than the basic unit that represents a starting data item may be used as a rotation key. FIG. 19B shows the first element of the basic unit shown in FIG. 19A. FIG. 19C shows the relationship between combined binary digits represented by first and second segments a and b of the first element and the amount of rotation of the box code. The rule of this rotation is given below.
a = "0", b = "1" No rotation
a = "1", b = "0" 2 x 90° counterclockwise rotation
a = "0", b = "0" 3 x 90° clockwise rotation
a = "1", b = "1" 3 x 90° counterclockwise rotation
According to this rule, the amount of rotation of basic units can be selected at random from among "2 x 90° counterclockwise rotation," "3 x 90° clockwise rotation," .... For example, when the rotation key "K" indicates "2 x 90° clockwise rotation," data is written onto the card 1 such that all basic units except the starting one are rotated clockwise from their original orientation in the amount of 2 x 90°. Thus, the basic units become unreadable unless they are rotated in the reverse direction in the same amount.

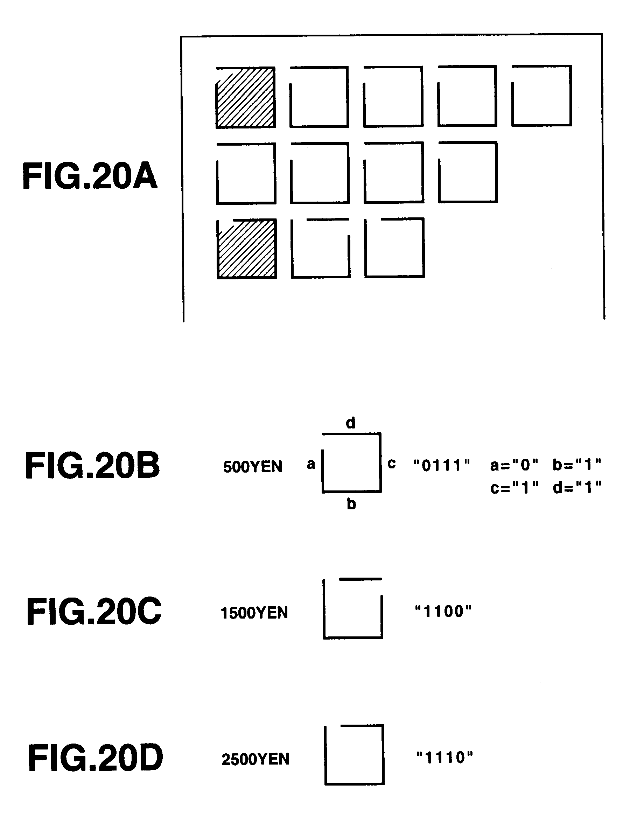

In the present embodiment, the basic unit shown in FIG. 2 is not used to represent numerical data, but the basic unit comprising only the first element is used as a merchandise mark in order to represent a certain amount of money. This allows numerical data to be represented in a compressed manner, as illustrated in detail in FIGS. 20A to 20D. FIG. 20A shows three variations of a merchandise mark 4. Each variation of the merchandise mark 4 represents the unit of purchase of a specific merchandise item. The same variation of the merchandise mark 4 uses basic units having the same shape.

In many cases, prepaid cards are used to handle a specific amount of money, as is done in pachinko parlors, golf practice ranges, and ski lift stations. Taking a pachinko parlor as an example, no one buys one or two pachinko balls; but customers buy 100, 300 or 500 pachinko balls at a time. In view of this practice, the basic unit "0111" as shown in FIG. 20B is used to represent a merchandise mark indicative of 100 pachinko balls; the basic unit "1100" as shown in FIG. 20C is used to represent a merchandise mark indicative of 300 pachinko balls; and the basic unit "1110" as shown in FIG. 20D is used to represent a merchandise mark indicative of 500 pachinko balls. If one pachinko ball costs 5 yen, the above merchandise marks represent 500 yen, 1500 yen, and 2500 yen, respectively.

Accordingly, when a prepaid card worth 10000 yen is to be issued, as shown in FIG. 20A, five 500-yen merchandise marks are written in the first row, four 500-yen merchandise marks are written in the second row, and two 1500-yen merchandise marks and one 2500-yen merchandise mark are written in the third row. That is, 9 x 500 yen + 2 x 1500 yen + 1 x 2500 yen = 10000 yen. Of course, any combination of merchandise marks is acceptable; for example, 8 500-yen merchandise marks may be combined with 4 1500-yen merchandise marks so as to be worth 10000 yen. Likewise, when golf balls are lent in 10-ball units for 500 yen each at a golf practice range, merchandise marks 4 may be prepared based on this unit price.

Next will be described issuance and use of a prepaid card.

When a 10000-yen bill is inserted into the card-issuing machine as shown in FIG. 21, the control unit 10 combines the merchandise marks 4 in a bit mapping manner as shown in FIG. 20A. Also, the control unit 10 determines the rotation key "K" (2 x 90° counterclockwise rotation, for example) for the card through combination of binary digits represented by first and second segments a and b of the first element as shown in FIG. 19C. Then, the control unit 10 causes all basic units except the starting one to be rotated accordingly from their original orientation for encryptation. This rotation of a basic unit will be described. When the rotation key "K" indicates "2 x 90° counterclockwise rotation," the basic unit is rotated clockwise in the amount of 2 x 90°. As a result, segment a moves to the position of segment c; segment b moves to the position of segment d; segment c moves to the position of segment a; and segment d moves to the position of segment b. Thus, the originally oriented basic unit represents binary "0111" by its segments a, b, c, and d, whereas the basic unit encrypted through clockwise 180° rotation represents binary "1101" by its segments c, d, a, and b, thereby providing security.

After being encrypted by rotation, the group of the merchandise marks 4 is written onto the card 1 by a write head 51. Subsequently, the written data is verified by a read head 52. After the written data are confirmed to be valid, the card 1 is delivered to the user.

In order to use the thus-issued prepaid card 1, a user inserts the card 1 into a card reader shown in FIG. 22, and enters the amount of payment from a payment input section 60. A CPU 61 of the card reader reads combined binary digits which are represented by two segments of the starting basic unit, and identifies the rotation key "K" according to the procedure similar to that employed by the card-issuing machine. Subsequently, a read head 63 reads the written merchandise marks 4. All the thus-read merchandise marks 4 except the starting one are rotated in accordance with the detected rotation key "K" to thereby decode the read merchandise marks 4 (for decoding, they are rotated clockwise in the amount of 2 x 90° because in this case, "K" indicates "2 x 90° counterclockwise rotation").

Some of the decoded merchandise marks 4 corresponding to the entered amount of payment are canceled to thereby make payment by the card 1. For example, when a user wants to pay 2000 yen by the prepaid card 1 bearing the merchandise marks 4 worth 10000 yen, one merchandise mark 4 worth 1500 yen and one merchandise mark 4 worth 500 yen are filled in (that is, covered with transparent ink), as shown in FIG. 20A. After payment by the prepaid card 1 is completed, the card 1 is returned to the user.

### Third Embodiment of Prepaid Card:

Next will be described a third embodiment of a prepaid card according to the present invention.

The prepaid card of the second embodiment uses merchandise marks suited for purchasing a specific kind of merchandise, whereas the prepaid card of the third embodiment uses currency marks suited for purchasing various kinds of general merchandise. That is, employed currency marks correspond, for example, to 1000-yen bills and 100-yen coins.

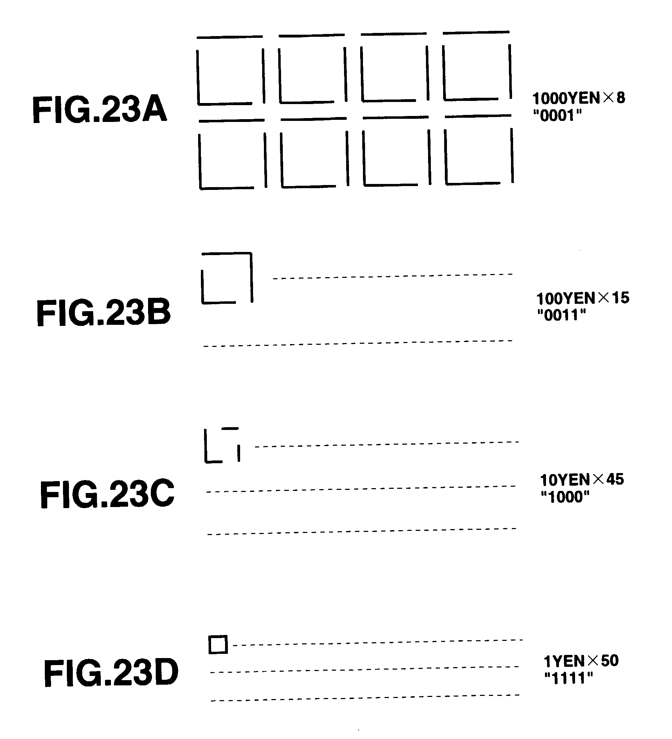

When a prepaid card worth 10000 yen is to be issued, for example, the basic unit "0001" is used to represent a 1000-yen currency mark, and eight of these basic units (8 x 1000 yen = 8000 yen) are written in the first and second rows. Also, as shown in FIG. 23B, the basic unit "0011" is used to represent a 100-yen currency mark, and 15 of these basic units (15 x 100 = 1500 yen) are written in the third and fourth rows. Further, as shown in FIG. 23C, the basic unit "1000" is used to represent a 10-yen currency mark, and 45 of these basic units (45 x 10 = 450 yen) are written in the fifth to seventh rows. Still further, as shown in FIG. 23D, the basic unit "1111" is used to represent a 1-yen currency mark, and 50 of these basic units (50 x 1 = 50 yen) are written at the eighth to tenth rows. Thus, the 10000-yen prepaid card 1 is issued.

When a user wants to make payment by the prepaid card 1, a cashier inserts the card 1 into the card reader shown in FIG. 22, and enters the amount of payment from a cash register which is interlocked with the card reader. For example, when an entered amount of money is 2130 yen, two 1000-yen marks, one 100-yen mark, and three 10-yen marks are filled in (that is, covered with transparent ink) to make payment by the card 1. Then, the card 1 is returned to the user if a balance remains.

As described above, the present invention uses a basic unit composed only of a single square element as a merchandise/currency mark to thereby represent numeral data corresponding to a specific merchandise item or a currency in a compressed manner, thus improving efficiency of a card system. Since calculation of the balance and encoding/decoding of the box code are simple, a computer can spare more of its processing capability for security-related processing, thereby improving reliability and security of a card system.

Obviously, numerous modifications and variations of the present invention are possible in light of the above teaching. It is therefore to be understood that within the scope of the appended claims, the present invention may be practiced otherwise than as specifically described herein.

## Claims

1. A two-dimensional code symbol comprising at least one basic unit which includes at least one polygonal element, each segment that forms one side of said polygonal element representing a predetermined amount of information.

2. A two-dimensional code symbol as claimed in Claim 1, wherein a plurality of polygonal elements of different sizes are disposed concentrically.

3. A two-dimensional code symbol as claimed in Claim 1 or Claim 2, wherein the or each polygonal element is quadrilateral.

4. A two-dimensional code symbol as claimed in any preceding claim, wherein each segment of the or each polygonal element is selectively cut at a plurality of positions to thereby represent said predetermined amount of information.

5. A two-dimensional code symbol as claimed in any preceding claim, wherein each segment of a polygonal element represents one binary digit, and one basic unit as a whole is arranged to represent a 16-digit binary number.

6. A two-dimensional code symbol as claimed in any preceding claim, wherein each segment of the or each polygonal element represents two or more binary digits.

7. A card carrying information, wherein the information is represented using a two-dimensional code symbol which comprises at least one basic unit, in which said basic unit includes at least one polygonal element, and in which each segment composing one side of the polygonal element represents a predetermined amount of information.

8. A card as claimed in Claim 7, wherein said two-dimensional code symbol is printed onto said card using transparent ink.

9. A card as claimed in Claim 7 or Claim 8, wherein said card is a prepaid card for payment use.

10. A prepaid card onto which merchandise marks are written in a predetermined area upon issuance, each mark corresponding to a unit price of specific merchandise, in the number needed to indicate an issued amount of money, and by which payment is made such that a merchandise mark corresponding to a required amount of payment is filled in so as to be nullified, wherein each of said merchandise marks includes a polygonal element, each side of which is arranged to represent an amount of money.

11. A prepaid card as claimed in Claim 10, wherein said polygonal element is a quadrilateral element.

12. A prepaid card onto which currency marks are written in a predetermined area upon issuance, said marks corresponding to an issued amount of money, and by which payment is made such that a currency mark corresponding to a required amount of payment is filled in so as to be nullified, wherein each of said currency marks includes a polygonal element, each side of which is arranged to represent an amount of money.
